# EUROPEAN PATENT APPLICATION

(11) **EP 3 488 910 A2**
(43) Date of publication of application: **29.05.2019**
(21) Application number: 18207891.5
(22) Date of filing: 22.11.2018
(51) Int. Cl.: B01D 24/30, B01D 24/46

(54) **APPARATUS FOR PURIFICATION OF A FLUID BY MEANS OF A FILTER BED**

(30) Priority: 22.11.2017 GE AP2017014632
(71) Applicant: Huber SE, 92334 Berching (DE)
(72) Inventor: Rokhvadze, Avtandil, 0177 Tbilisi (GE)
(74) Representative: Baudler, Ron

(57) **Abstract**

The invention relates to a gravity filter comprising a housing (1), a cavity (3) with a base in the form of a cone, an inlet for a liquid to be cleaned, with tubes (4, 5, 6) for discharging the cleaned and cleaning liquid, a filtering medium (7) placed in the housing (1), a structurally combined unit, fixed along the vertical axis of the housing (1), which in turn contains an airlift (8) with an air tank (10) that is configured in communication with a compressed air source, a cleaning element (9), which preferably comprises two parts, and which is fixed over the airlift (8), wherein the cleaning element (9) has one compartment with a zigzag channel (14), and wherein the cleaning element (9) has, especially concentrically located, compartments (15, 16), the internal and the external ones, and a tube (4, 5, 6) for cleaning liquid drainage, in communication with the latter; furthermore, the filter has distribution units (12, 11) for liquid and for the filtering medium. The filter is characterized in that it is further equipped with a vibration aerator (20), which is inserted or configured to be inserted into the zigzag channel (14) of the cleaning element (9), especially of its lower part (13) of the structurally combined unit, and/or with a means for pressure and speed reducing of the upward flow of the cleaning liquid in the internal compartment of the cleaning unit, especially its upper part, and/or with a means for providing the airlift (8) vibration.

## Description

The invention relates to filters, more precisely to filters containing powdery filtering medium that can be used to purify drinking, industrial or waste water.

There are various types of filters in which sand is used as a powdery filtering medium. The above types include gravity sand filters, including self-cleaning continuous filters and rapid filters (contact filters). In self-cleaning continuous filters the airlift capacity is designed for the load driving the filtering medium, which indicates that, based on the characteristics of sand as the filtering medium, its sliding moment is limited. This limitation is due to two cone-shaped elements, one of which is directed upwards, while another one is a hollow cone connected to the housing with an end directed downwards, and the above-mentioned elements constitute a distribution chamber in the form of a ring. In filters of this type the airlift provides fastener lift of the sand before the sand mass begins moving downwards. In such filters the filtration is directed from top to bottom; besides the filters are designed so as to wash the filtering medium by themselves. And in the rapid filters the filtration is directed from bottom to top, and it is necessary to stop the filtration process for washing the filtering medium. Despite this difference, the above filters have a number of identical units and elements that ensure their smooth operation. Such elements and units include a housing, filtering medium in the form of sand, sand and liquid distribution units, etc.

A filter for continuous liquid cleaning is known, the filter comprising a housing that consists of a cylinder-shaped part and a hollow cone-shaped part connected to each other, a distributing element, an airlift installed axially and a filtering element placed above the airlift, comprising sand as a filtering medium and being composed of the external and internal cylinder-shaped elements with a zigzag channel configured therebetween to pass through the contaminated filtering medium, with its simultaneous cleaning, the cleaning being provided with cleaning water counterflow. After cleaning, the cleaned filtering medium is returned to the filtering medium layer in the housing, while the cleaning liquid with the contaminated medium is removed by the tube for discharging. (1)

A continuous filtration system is known as well, the system comprising a housing, a cavity with a base in the form of a cone, a inlet for liquid to be cleaned, with tubes for discharging the cleaned and cleaning liquid, a filtering medium in the form of silica sand placed in the housing, a filtering unit fixed along the vertical axis of the housing, which in turn contains an airlift, a cleaning element fixed over the airlift, an air tank configured to connect to a forced air source, wherein the cleaning element is formed of two parts, the lower part has one compartment with a zigzag channel formed therein, and the upper part has two concentrically located compartments, the internal and the external ones, and a tube for cleaning liquid drainage, in communication with the latter, furthermore, in the upper part of the cleaning element a valve is provided, wherein the filter has sand and liquid distribution units, said units being concentric with respect to each other and the airlift, wherein the sand distribution unit is a truncated cone-shaped element with the end directed upwards, and the liquid distribution unit in the form of a transversely located cone, inserted into a fabric filter. (2)

A rapid filter is known as well, the filter comprising a housing with a filtering medium and a liquid distribution unit located therein. In one embodiment, in the above-mentioned rapid filter, the liquid distribution unit is in the form of transverse perforated tubes connected to the supply tube. The housing is equipped with a partition that actually divides it into two concentric parts. The filtered material is accumulated in the external part and actually creates a pillow of liquid. The filter is also provided with a shield that actually provides a curved motion of the liquid to be cleaned. (3)

The main drawback of the objects disclosed in the above documents and devices of a similar purpose, design or principle known from the general prior art, is incomplete cleaning of the filtering medium, poor quality of the filtered material, uneven airlift operation due to the changes in the mixed mass liquid phases at the cone-shaped bottom of the housing, which is caused by the inconstant vibrations due to non-uniform movement of the filtering element in the housing at an uneven speed. The high cost of filtering medium is associated with a high probability of removing sand particles, together with residual contaminants, from the cleaning unit, which in turn reduces the duration of the filtration cycle and increases operating costs.

In addition to the above, the biggest disadvantage of rapid filters concerns the problems associated with its cleaning, because in the case of cleaning, the filtration process stops, while cleaning is carried out by feeding the filtered liquid under pressure. At this time, the sand particles start their chaotic movement and collide with each other, the pollutants attached to the mentioned particles are separated and removed outside with the cleaning liquid. Such a cleaning scheme adversely affects the efficiency and performance of such filters, and increases operating costs.

Prior to the creation of the invention, studies were conducted, the purpose of which was to evaluate the data obtained by long-term results on existing up-to-date filtering units, and further to eliminate the identified deficiencies and make changes, which will make the work more efficient. To improve the filtration processes of filters, industrial studies were mainly conducted with two different types of filters, with the direction of filtration from bottom to top:
1. with the continuous filtration filters;
2. with the rapid filters (contact filters).

The changes made in terms of adding new structural elements to the above filters or upgrading the existing elements, respectively, had a positive effect on the operation of pilot or existing filters, and the technical and economic analysis showed a positive result, which affected the quality of filtered material, reduced losses and operating costs, which had a positive effect on the overall ecological environment.

As a result of the above works, several technical solutions were traced, which are the basis for the invention and which provide for the elimination of the above disadvantages.

The mentioned disadvantages are eliminated, on the one hand, with the help of a gravity sand filter, in particular, a self-cleaning continuous filter, comprising a housing, a cavity with a base in the form of a cone, an inlet for liquid to be cleaned, with tubes for discharging the cleaned and cleaning liquid, a filtering medium in the form of silica sand placed in the housing, a structurally combined unit, fixed along the vertical axis of the housing, which in turn contains an airlift with an air tank that is configured in communication with a forced air source, a two-part cleaning element, fixed over the airlift, wherein the lower part has one compartment with a zigzag channel, and the upper part has two concentrically located compartments, the internal and the external ones, and a tube for cleaning liquid drainage, in communication with the latter; furthermore, the filter has sand and liquid distribution units, wherein the sand distribution unit is made in the form of a cone-shaped element with an end directed to the top, while the liquid distribution unit is made in the form of a jacket located on the airlift and transverse perforated tubes attached thereto. The filter is further equipped with a vibration aerator, which is inserted or configured to be inserted into the zigzag channel of the cleaning element lower part of the filtering device, and/or with a means for pressure and speed reducing of the upward flow of the cleaning liquid in the internal compartment of the upper part of the cleaning unit, and/or with a means for providing the airlift vibration.

On the other hand, with the help of a gravity sand filter, in particular a rapid filter, comprising a housing, an inlet for a liquid to be cleaned, with tubes for discharging the cleaned and cleaning liquid, a filtering medium in the form of silica sand placed in the housing, and a liquid distribution unit, which is located at the bottom of the housing, and a structurally combined unit, fixed along the vertical axis of the housing, which in turn contains an airlift with an air tank that is configured in communication with a forced air source, a two-part cleaning element, fixed over the airlift, wherein the lower part has a compartment with a zigzag channel, and the lower part has two concentrically located compartments, the internal and the external ones, and a tube for cleaning liquid drainage, in communication with the latter; furthermore, the filter has a sand distribution unit provided on the internal wall of the housing in the form of a directional bevel, and a system of tubes connected to the airlift by means of a discharge chamber, in the bottom part, each tube of the system being formed by inclined and vertical parts and equipped with suction means, furthermore, it is further equipped with a vibration aerator, which is inserted or configured to be inserted into the zigzag unit of the cleaning element upper part of the filtering device and/or with a means for reducing pressure and speed of the cleaning liquid upper flow in the internal compartment of the cleaning unit upper part and/or with a means for providing the airlift vibration.

Furthermore, in the structurally combined unit for gravity sand filters, which may be used for upgrading said filters and comprises an airlift with an air tank, configured in communication with a forced air source, a two-part cleaning element, fixed over the airlift, the lower part having one compartment with a zigzag channel, the upper part having two concentrically located compartments, the internal and the external ones, and a tube for cleaning liquid drainage, in communication with the latter. Besides, the system of tubes is connected with the airlift in the bottom part by means of a discharge chamber, each tube of the system being formed by inclined and vertical parts and equipped with suction means, wherein the device further comprises a module for controlling said suction means, the airlift has an additional air tank in communication with a forced air source to provide double rise, in addition, it is further equipped with vibration aerator, which is inserted or configured to be inserted into the zigzag unit of the cleaning unit lower part of the filtering unit and/or with a means for reducing pressure and speed of the cleaning liquid upward flow in the internal compartment of the cleaning unit upper part and/or with a means for providing the airlift vibration.

For these filters manufacturing or upgrading specific embodiments of the constituent units and elements may be used, wherein:
In one embodiment the vibration aerator comprises a tubular housing in the form of a ring, provided with holes formed in the central groove along the entire length of the internal surface, wherein the housing is inserted into the filtering material and elastic material balls are placed in its cavity, and it is further equipped with a tube for communicating the cavity of the housing with a forced air source.

In another embodiment the vibration aerator comprises a housing, consisting of two tubular parts in the form of a half ring, each part being closed at the end surfaces and comprising a central groove provided with holes formed therein along the entire length of the internal surface, each part of the housing being inserted into filtering material, with elastic material balls placed in its cavity, furthermore, the above part is provided with tubes, respectively, for communicating the individual cavities with a forced air source.

The filtering material is made of polyvinyl chloride.

The means for providing the airlift vibration for the continuous filters is configured in the form elastic material balls, located in the air tank, fixed thereon, while for the rapid filters - in the form of elastic material balls, located in a slot, formed in the discharge chamber.

The elastic material balls are made, for example, of rubber or caoutchouc.

According to one embodiment of the invention the means for reducing pressure and speed of the cleaning liquid upper flow in the internal compartment of the cleaning element upper part is configured at least in the form of one inclined flap with one end attached to a wall of the internal compartment and with the other end located at a distance from the opposite wall, wherein in the case of one or more flaps they are arranged in a mutually movable manner in the vertical plane and so each subsequent flap is attached to the wall, opposite of the one holding the preceding flap.

According to another embodiment of the invention the means for reducing pressure and speed of the cleaning liquid upper flow in the internal compartment of the cleaning element upper part is configured at least in the form of an inclined tube that discharges the cleaning liquid in one external compartment, each tube being equipped with a valve for controlling the cleaning liquid level.

The technical effect of the invention is a complete cleaning of the filtering medium, improving the quality of the filtered material, reducing the cost of filtering media and operation, increasing productivity and reducing the cleaning liquid usage rate.

A complete cleaning of the filtering medium is ensured by the fact that both gravity sand filters, the continuous and the rapid one, according to the invention, in both embodiments, are equipped with a vibratory aerator in a zigzag channel formed in the lower part compartment of the cleaning unit, because the uniform distribution of sand used as a filtering medium is provided in the central part of the filter and a massive return of sand during the air supply forced mode is caused, in addition, with the sand movement along the zigzag channel from top to bottom the above-mentioned vibration aerator provides bringing it into suspension by the counterflow and removing residual contamination due to colliding particles. A complete cleaning of the filtering medium is also ensured by the upper part of the cleaning unit, in particular, together with providing artificial barriers in the internal compartment connected to the zigzag channel in the form of an inclined tube or inclined flaps for moving the cleaning liquid into the external compartment, since they ensure that the floating sand particles remaining in the cleaning liquid will be captured and returned back, because due to reducing the pressure and flow rate, their low value can no longer let the sand into the external compartment to be withdrawn outward through the tube for discharging. Such a barrier system has a positive effect when using full water-air load. In addition to the above effects, such a structure of the cleaning element makes it possible to reduce the dimensions of some units or elements. For example, the size of the zigzag channel is about up to 40%, which in itself leads to a reduction in the production or operation cost. The provision of airlift with vibration means results in a consistent, measured and uniform movement of the filtering medium over the entire filter area, respectively, eliminates the possibility of changing vibrations due to the amplitude equalization and the process of uneven suction in the part of the cone-shaped bottom of the housing due to the changes in the mixed masses liquid phases is brought to a minimum.

These design solutions helped to achieve a successive movement of the filtering medium from top to bottom and its uniform distribution over the area of the filtration surface, which improves the quality of the filtrated material, because when filtering water and in the course of mutually opposite sand movement, the difference in the speeds of two different masses moving in counterflow is minimized.

In the invention, preference is also given to the specific design form of some elements or units, for example, the embodiment of the vibrating aerator is such that it can be made separately, and quite simply, without applying extra effort, inserted into already existing continuous filters, or can be made together with said filters. The embodiment of the airlift vibrating means provides the same opportunity, since the air tanks are already provided in such filters and the arrangement of elastic balls of the appropriate size is not a problem as well. Similarly to the above, said means may be made together with filters as well. These particular advantages make it possible not only to produce highly efficient new filters, but also to sufficiently upgrade the filters that are already in operation.

Another advantage of the invention is that, due to their design or modernization, rapid filters are transformed into continuous filters that do not require stopping the filtration process and switching to the cleaning mode, in which case the filtering medium is cleaned and the filtration proceeds continuously. The advantage of the invention consists in providing a sand distribution unit construction for the rapid self-cleaning filters. The embodiment of this unit allows for a uniform distribution of sand as filtering medium, due to the specific configuration of the system of tubes (inclined, cone-shaped) and the directional bevel inside the housing. In addition, the location of the discharge chamber in this unit provides the principle of lifting in two stages. This makes the device more efficient. During the lifting stages, not only a consistent, measured and uniform sand movement is provided in the airlift, but when stopping the process the possibility of returning the raised mass back to the airlift suction chamber is eliminated as well. Said unit is functional because it is possible to manufacture it separately, respectively, for upgrading rapid filters. The above-mentioned advantages, in turn and in general, provide a reduction in the consumption of cleaning liquid, an improvement in the quality of filtered materials, productivity and an increase in efficiency.

The invention is disclosed by the accompanying drawings:
- **Table 1**: shows the values based on testing results of some characteristics for the filters known from the prior art and for filters, made in accordance with the invention;

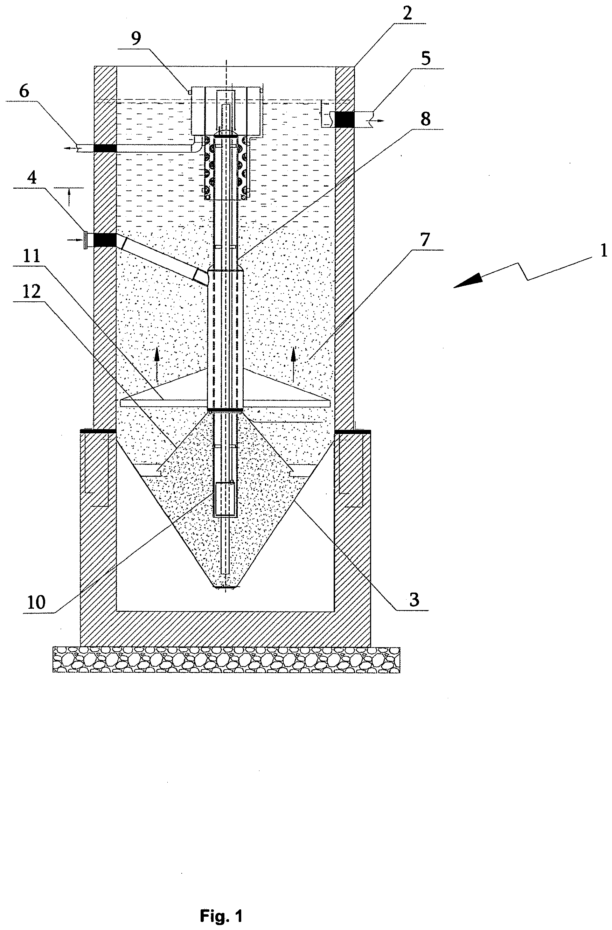

- **Fig. 1**: is a schematic representation of a self-cleaning continuous filter according to an embodiment of the invention;
- **Fig. 2**: is a schematic representation of a rapid filter according to an-other embodiment of the invention;

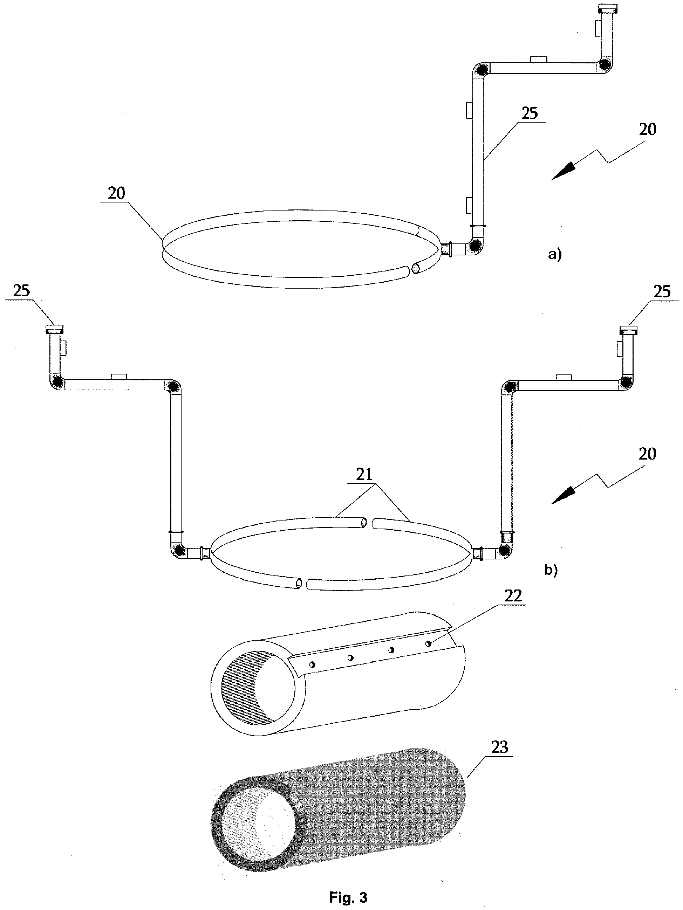

- **Fig. 3**: is a schematic representation of a vibration aerator according to an embodiment;

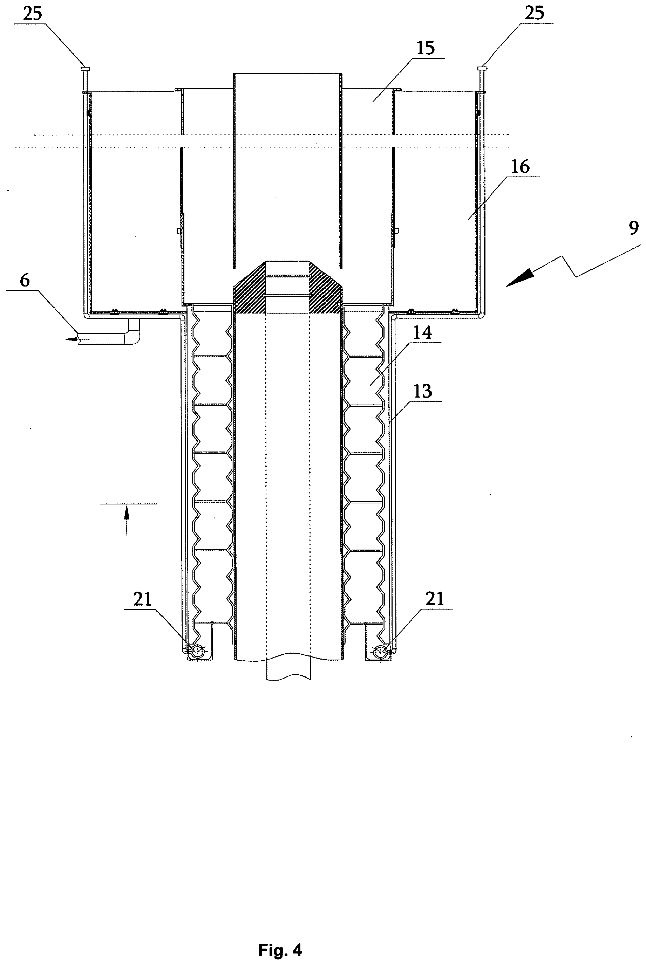

- **Fig. 4**: is a schematic representation of a vibration aerator according to an embodiment;

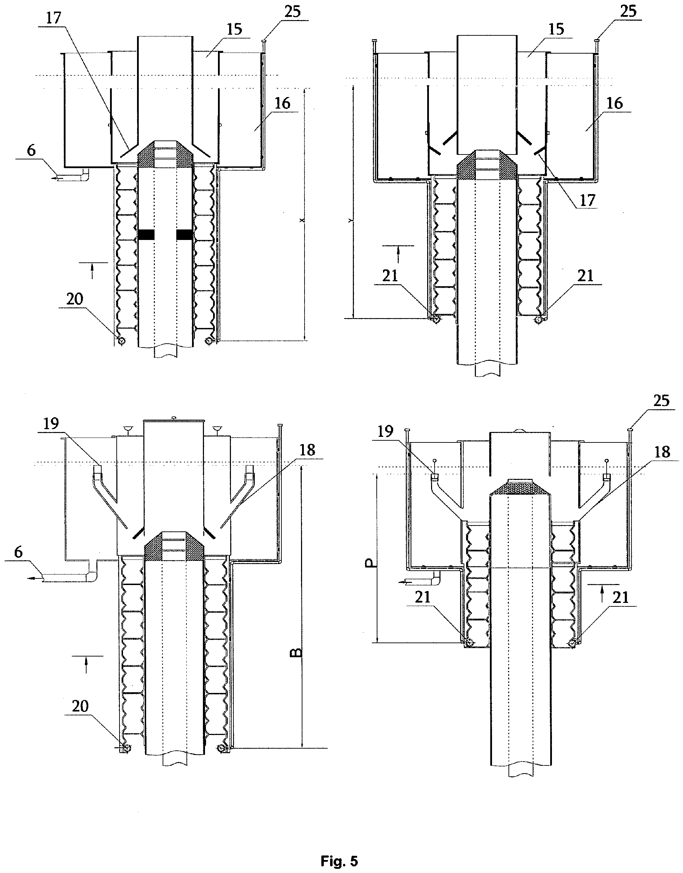

- **Fig. 5**: is a schematic representation of a cleaning element according to various embodiments and combinations thereof;
- **Fig. 6**: is a schematic representation of variants of the airlift vibration means, respectively for ready-made and upgraded filters;

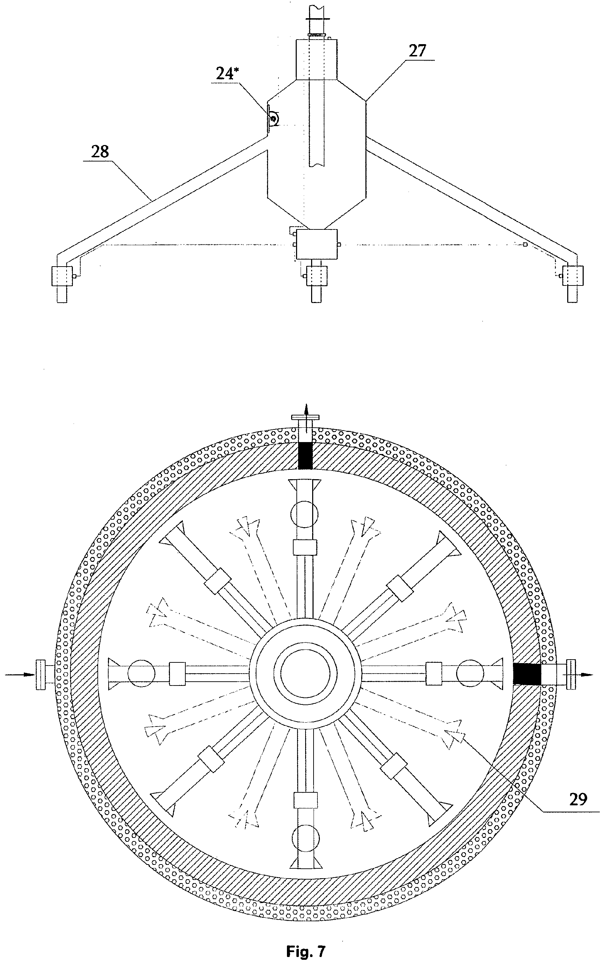

- **Fig. 7**: is a schematic representation of a sand distribution unit in rapid self-cleaning filters;
- **Fig. 8**: shows graphical samples of the vibration amplitude for the existing filters (known from the prior art) and for filters made according to the invention.

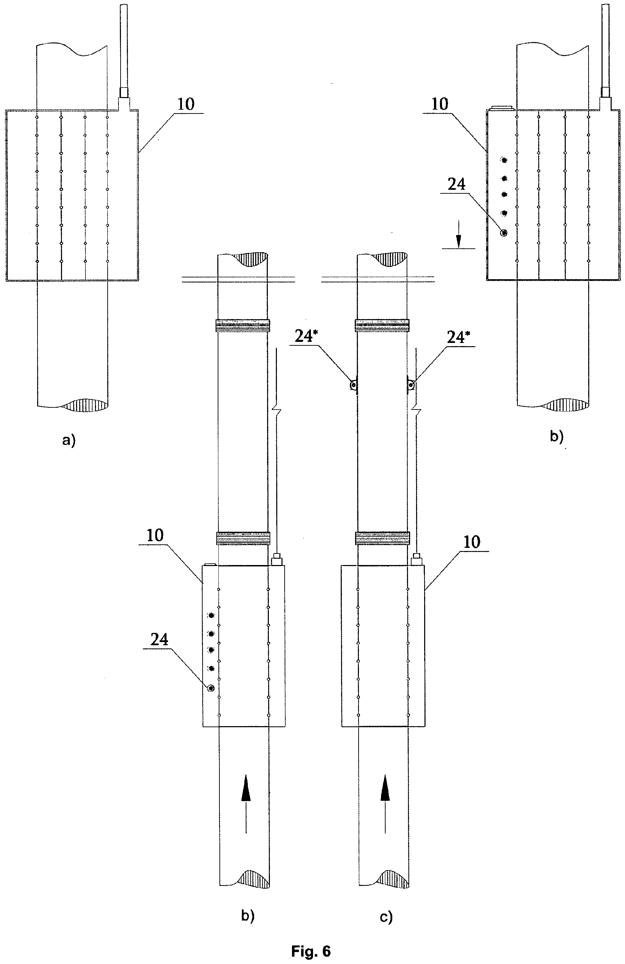

According to the invention a gravity sand filter, in particular a self-cleaning continuous filter, comprises a housing 1, consisting in a supported body 2 and a base 3 in the form of a void cone. The housing is equipped with tubes 4, 5 and 6 for inputting the liquid to be cleaned and for discharging the cleaned and cleaning liquid, respectively. A filtering medium 7 in the form of silica sand is placed in the housing. Along the vertical axis of the housing, a structurally combined unit is fixed, being a filtering unit, which in turn contains an airlift 8, a cleaning element 9 installed above the airlift, an air tank 10 configured to be connected to a forced air source. Besides, in the housing there is a liquid distribution unit 11, in the form of a perforated jacket located on the airlift, and a sand distribution unit 12, in the form of a cone-shaped element with the end directed to the top. It should also be noted that the supported body and the base body of the housing can be made of reinforced concrete, while the base in the form of a cone can be made of stainless steel. The cleaning element can also be made of stainless steel and formed of two parts. The lower part 13 has one compartment with a zigzag channel 14 formed in it, while the upper part has two concentrically located compartments 15 and 16, the internal and the external ones, respectively. It is clear that the internal and the external compartments are in a fluid communication with each other, wherein the internal compartment upper part is placed above the zigzag channel, and a tube for cleaning liquid drainage is connected to the external compartment. According to one embodiment, a barrier is provided in the internal compartment to reduce the pressure and speed of the upward flow of cleaning liquid. The barrier is a means that is made at least in the form of one inclined flap 17, which is attached with its one end to one of the internal compartment walls, and its other end is located at a distance from the opposite wall. In the case of the existence of a flap system, they are positioned in a vertical plane, mutually movable and in such a way that each subsequent flap is attached to the wall, opposite of the one holding the preceding flap. In another embodiment, the means for reducing pressure and speed of the cleaning liquid upper flow in the internal compartment of the cleaning element upper part is configured at least in the form of an inclined tube or tubes 18 discharging the cleaning liquid from the internal compartment into the external compartment, the above tubes being equipped with a valve(s) 19 for controlling the cleaning liquid level; obviously, such embodiments do not exclude the possibility of combining them in any form, for example, the means for reducing pressure and speed of the cleaning liquid upper flow in the internal compartment of the cleaning element upper part and for providing the return of the risen sand, can be made as a combination of an inclined flap or flaps and an inclined tube(s) discharging the cleaning liquid from the internal compartment into the external one. The filter is equipped with a vibration aerator 20, which is inserted or configured to be inserted into the zigzag channel of the cleaning element lower part of the filtration unit. According to the invention, the vibration aerator can also be made in several forms, for example, in a configuration in which it has a tubular housing 21 in the form of a ring, with holes formed in the central groove extending along the entire length of the internal surface 22, wherein the housing is inserted into the filtering material 23 and elastic material balls 24 are placed in its cavity. Furthermore, it is provided a with tube 25 for communicating the cavity of the housing with a forced air source, or in such a configuration, in which the housing of the vibrating aerator is formed by parts being closed at the end surfaces in the shape of a half ring, each part of the housing being inserted into the similar filtering material and said parts are provided with a separate tube for communicating with a forced air source. The filtering material can be made of polyvinyl chloride or any material known from the prior art. The filter may also be equipped with a means for providing the airlift vibration. This means can be an air tank 10 fixed on the airlift itself, in which elastic material balls can be placed, or it can be made as a separate element. Fig. 6 shows a design feature that can be made as a separate manufactured element between the air tank and the upgraded air tank and which can mainly represent a layout of elastic material balls.

Similar to the self-cleaning continuous filter, a rapid filter according to the invention further contains identical structural elements and units, such as filtering medium and filtering unit, according to the invention, comprising a vibration aerator, a cleaning element or an airlift vibration means. Although due to the difference in the operation mechanism, some units of rapid filters are made and located in the housing in different ways. As for example, in these filters, the liquid distribution unit is located at the bottom, while the sand distribution unit is made as a combination of a directional bevel 26 formed on the internal wall of the housing, a discharge chamber 27 connected to the airlift in its bottom part, and a system 28 of tubes attached thereto, wherein each tube of the system is formed by inclined and vertical parts, the vertical parts of the system tubes being provided with suction means 29. Such rapid filters are equipped with a control unit for selectively enabling the operation of the suction means.

Despite the fact that in the illustrative embodiment described herein, the filter designs were described in a common form of implementation, it is obvious that in the process of manufacturing or upgrading they can be considered as a combination of all the aspects according to the invention (that is, design) together, as well as separately, or in any acceptable combination.

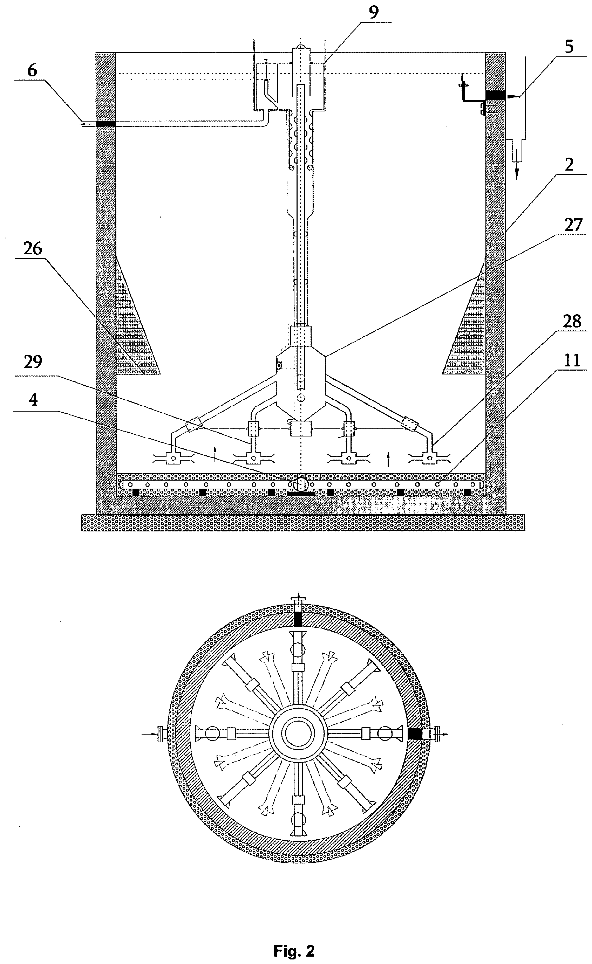

The structurally designed form of the structurally combined unit required for upgrading rapid filters is not shown in a separate drawing, although all its features are clearly seen in the schematic representation of fig. 2.

The self-cleaning continuous filter operates as follows: first, the cleaning liquid flows through the tubes to enter the liquid distribution unit, from which it comes in equal flows through perforated holes, a part of the liquid passes through the filtering medium, accumulates in the upper part and flows to the consumer, wherein a part gets into the part of the cone-shaped bottom of the housing, from where it is captured by the airlift and gets into the cleaning element. Due to the airlift vibration, along with the capturing the sand-cleaning liquid into the airlift and its movement, all the positive effects mentioned above are observed. When contaminated sand, along with cleaning liquid, moves from top to bottom, that is, when moving through a zigzag channel by means of the vibration aerator, it is cleaned by a counter flow, with most of the cleaned sand returning to the housing, while the cleaning liquid, along with pollutants and possibly residual sand particles, moves to the internal compartment of the upper part, where, due to the barrier system in the upper part of the cleaning element, the pressure and flow rate decrease takes place in the water-air flow, thereby the sand particles can no longer be captured and the cleaning liquid together with the remaining pollutants flows into the external compartment. The described processes are already proceeding with current results. The valve located on the tube provides the transition of the cleaning liquid from the internal compartment to the external one, making it possible to control the level between the filtered material and the cleaning liquid.

The operation principle of the upgraded filter according to the invention is similar to that described above. The difference consists in the fact that in this filter the liquid flows from the bottom, the sand distribution unit is made as a combination of two elements, wherein, for example, due to the directional bevel provided in one of them, the sand sinking rate is controlled, and due to the cone-shaped system of tubes provided in the other element, sand distribution at the lower part is achieved. In addition, in these filters the airlift is equipped with two air tanks in accordance with the lifting stages. The existence of the control unit provides operation according to a pre-calculated scheme, respectively, the alternate operation of the suction means. The vibration of the discharge chamber in general provides the airlift vibration and therefore all the advantages discussed above.

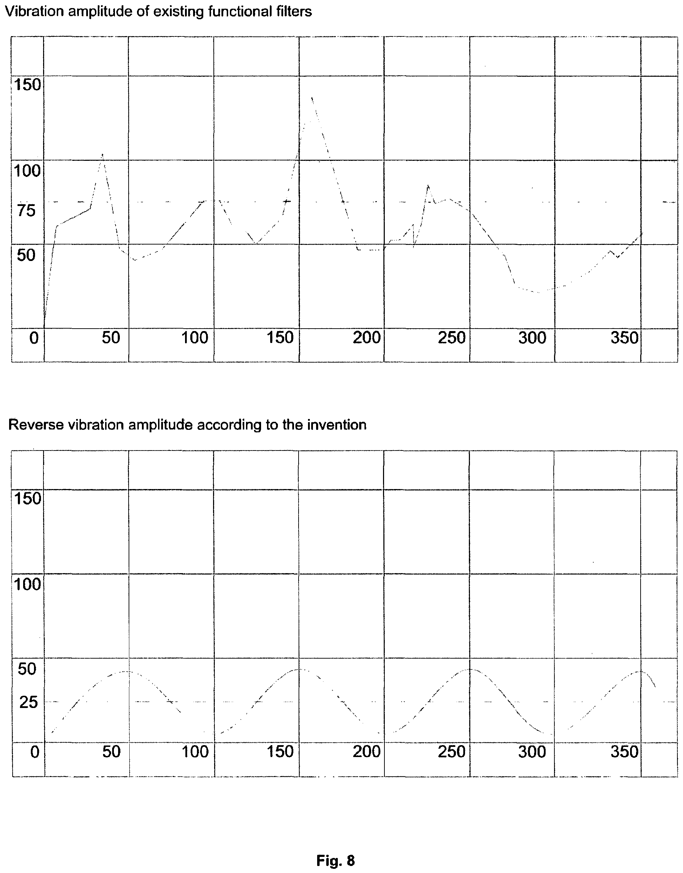

In accordance with the design forms disclosed in this invention, a filter was obtained and compared with the filters known from the prior art, in view of their operation and characteristics. The revealed advantages in some characteristics are obviously given according to the data indicated in table 1, as well as, according to the graphical samples of the amplitude (fig. 8).

| Relative data of the purifier with the existing water-air and vibration flow according to the invention | | | |
|---|---|---|---|
| | Name | Air | Vibration/Air |
| 1 | Cleaning water Speed of the m/s | 0.014 | 0.049 |
| 2 | Cleaning water consumption l/min | 64 | 49 |
| 3 | Cleaned sand turbidity | 4.6 mg/l | 1.2 mg/l |
| 4 | Filtered material turbidity | 1.2 mg/l | 0.23 mg/l |
| 5 | Sand movement speed mm/min | 7 | 5 |
| 6 | Airlift capacity l/min | 35 | 25 |
| 7 | Filter area m² | 5 | 5 |
| 8 | Vibration amplitude (Hz) | 50-130 | 20-25 |
| 9 | Sand lowering speed in water | 0.3 m/s | 0.3 m/s |

**Table 1**

| Possibilities of a structurally combined unit according to the invention during filtration on sand filters | | | | | |
|---|---|---|---|---|---|
| Nº | Incoming material mg/l | Polymer coagulant | Polymer flocculant | At the outlet of the clarification tank | Filtered material |
| 1 | 300 | - | - | 142 | 48.9 |
| 2 | 300 | 0.1 | - | 133.3 | 0.23 |
| 3 | 300 | 0.5 | 0.05 | 20.8 | 0.15 |

## Claims

1. A gravity filter, in particular a self-cleaning continuous filter, comprising a housing (1), a cavity (3) with a base in the form of a cone, an inlet for a liquid to be cleaned, with tubes (4, 5, 6) for discharging the cleaned and cleaning liquid, a filtering medium (7), especially in the form of silica sand, placed in the housing (1), a structurally combined unit, fixed along the vertical axis of the housing (1), which in turn contains an airlift (8) with an air tank (10) that is configured in communication with a compressed air source, a cleaning element (9), which preferably comprises two parts, and which is fixed over the airlift (8), wherein the cleaning element (9), preferably the lower part (13), has one compartment with a zigzag channel (14), and wherein the cleaning element (9), preferably the upper part, has, preferably two, especially concentrically located, compartments (15, 16), the internal and the external ones, and a tube (4, 5, 6) for cleaning liquid drainage, in communication with the latter; furthermore, the filter has distribution units (12, 11) for liquid and for the filtering medium, wherein the distribution unit (12) for the filtering medium is preferably made in the form of a cone-shaped element with an end directed to the top, while the water distribution unit (11) is preferably made in the form of a jacket located on the airlift (8) and transverse perforated tubes attached thereto, **characterized in that** it is further equipped with a vibration aerator (20), which is inserted or configured to be inserted into the zigzag channel (14) of the cleaning element (9), especially of its lower part (13) of the structurally combined unit, and/or with a means for pressure and speed reducing of the upward flow of the cleaning liquid in the internal compartment of the cleaning unit, especially its upper part, and/or with a means for providing the airlift (8) vibration.

2. The gravity filter, in particular the self-cleaning continuous filter, of claim 1, **characterized in that** the vibration aerator (20) comprises a tubular housing (21) in the form of a ring, provided with holes (22) formed in the central groove along the entire length of the internal surface, wherein the housing (21) is inserted into a filtering material (23), elastic material balls (24) are placed in its cavity, and it is further equipped with a tube (25) for communicating the cavity of the housing (21) with a forced air source.

3. The gravity filter, in particular the self-cleaning continuous filter, of claim 1, **characterized in that** the vibration aerator (20) comprises a housing (21), which consists of two tubular parts in the form of a half ring, each part being closed at the end surfaces and comprising a central groove provided with holes (22) formed therein along the entire length of the internal surface, each part of the housing (21) being inserted into the filtering material (23) with elastic material balls (24) placed in its cavity, the above parts being further provided with tubes (25), respectively, for communicating the cavity of the individual tubular parts with an air source.

4. The gravity filter, in particular the self-cleaning continuous filter, of claims 1-3, **characterized in that** the filtering material (23) is made of polyvinyl chloride and/or that the means for providing airlift (8) vibration is configured in the form elastic material balls (24), located in the air tank (10), fixed thereon and/or that the elastic material balls (24) are made, for example, of rubber or caoutchouc.

5. The gravity filter, in particular the self-cleaning continuous filter, of claims 1-4, **characterized in that** the means for reducing pressure and speed of the cleaning liquid upper flow in the internal compartment of the cleaning element (9) upper part is configured at least in the form of one inclined flap (17) with one end attached to a wall of the internal compartment and with the other end located at a distance from the opposite wall, wherein in the case of several flaps provided they are arranged in a mutually movable manner in the vertical plane and so each subsequent flap is attached to the wall, opposite to the one holding the previous flap.

6. The gravity filter, in particular the self-cleaning continuous filter, of claims 1-4, **characterized in that** the means for reducing pressure and speed of the cleaning liquid upper flow in the internal compartment of the cleaning element (9) upper part is configured at least in the form of an inclined tube (18) that discharges the cleaning liquid from one internal compartment into the external compartment, the above tubes (18) being equipped with a valve (19) for controlling the cleaning liquid level.

7. A gravity sand filter, in particular a rapid filter, comprising a housing (1), an inlet for a liquid to be cleaned, with tubes (4, 5, 6) for discharging the cleaned and cleaning liquid, a filtering medium (7) in the form of silica sand placed in the housing (1) and a liquid distribution unit (11), which is located at the bottom of the housing (1), **characterized in that** a structure-combined unit is fixed along the vertical axis of the housing (1), which in turn comprises an airlift (8) with an air tank (10) that is configured in communication with a compressed air source, a two-part cleaning element (9), fixed over the airlift (8), wherein the lower part (13) has one compartment with a zigzag channel (14), and the upper part has two concentrically located compartments (15, 16), the internal and the external ones, and a tube (4, 5, 6) for cleaning liquid drainage in communication with the latter, furthermore, the filter has the following:
a sand distribution unit (12), provided on the internal wall of the housing (1) in the form of a directional bevel (26), and a system (28) of tubes connected to the airlift (8) by means of a discharge chamber (27), in the bottom part, each tube of the system (28) being formed by inclined and vertical parts and equipped with suction means (29); furthermore, it is further equipped with a vibration aerator (20), which is inserted or configured to be inserted into the zigzag unit of the cleaning element (9) upper part of the filtering device and/or with a means for reducing pressure and
speed of the cleaning liquid upper flow in the internal compartment of the cleaning unit upper part and/or with a means for providing the airlift (8) vibration.

8. The gravity sand filter, in particular the rapid filter, of claim 7, **characterized in that** the vibration aerator (20) comprises a tubular housing (21) in the form of a ring, provided with holes (22) formed in the central groove along the entire length of the internal surface, wherein the housing (21) is inserted into the filtering material (23), elastic material balls (24) are placed in its cavity, and it is further equipped with a tube (25) for communicating the cavity of the housing (21) with a forced air source.

9. The gravity sand filter, in particular the rapid filter, of claim 7, **characterized in that** the vibration aerator (20) comprises a housing (21), consisting of two tubular parts in the form of a half ring, each part being closed at the end surfaces and comprising a central groove provided with holes (22) formed therein along the entire length of the internal surface, each part of the housing (21) being inserted into the filtering material (23) with elastic material balls (24) placed in its cavity, furthermore, the above part is provided with tubes (25), respectively, for communicating the individual cavity with a forced air source.

10. The gravity sand filter, in particular the rapid filter, of claims 7-9, **characterized in that** the filtering material (23) is made of polyvinyl chloride and/or that the means for providing the airlift (8) vibration is configured in the form of a vibration means fixed on the discharge chamber (27), and comprising elastic material balls (24), located in a slot, formed in said chamber (27) and/or that the elastic material balls (24) are made, for example, of rubber or caoutchouc.

11. The gravity sand filter, in particular the rapid filter, of claims 7-10, **characterized in that** the means for reducing pressure and speed of the cleaning liquid upper flow in the internal compartment of the cleaning element (9) upper part is configured at least in the form of one inclined flap (17) with one end attached to a wall of the internal compartment and with the other end located at a distance from the opposite wall, wherein in the case of several flaps they are arranged in a mutually movable manner in the vertical plane and so each subsequent flap is attached to the wall, opposite of the one holding the preceding flap and/or that the means for reducing pressure and speed of the cleaning liquid upper flow in the internal compartment of the cleaning element (9) upper part is configured at least in the form of an inclined tube (18) that discharges the cleaning liquid in one external compartment, each tube (18) being equipped with a valve (19) for controlling the cleaning liquid level.

12. A structurally combined unit for gravity sand filters, comprising an airlift (8) with an air tank (10), configured in communication with a compressed air source, a two-part cleaning element (9), fixed over the airlift (8), the lower part (13) having one compartment with a zigzag channel (14), the upper part having two concentrically located compartments (15, 16), the internal and the external ones, and a tube (4, 5, 6) for cleaning liquid drainage, in communication with the latter, **characterized in that** the system (28) of tubes is connected with the airlift (8) in the bottom part by means of a discharge chamber (27), each tube of the system (28) being formed by inclined and vertical parts and equipped with suction means (29), wherein the device further comprises a module for controlling said suction means (29), the airlift (8) has an additional air tank (10) in communication with a forced air source to provide double rise, in addition, it is further equipped with vibration aerator (20), which is inserted or configured to be inserted into the zigzag channel (14) of the cleaning element (9) lower part (13) of the structurally combined unit and/or with a means for reducing pressure and speed of the cleaning liquid upward flow in the internal compartment of the cleaning unit upper part and/or with a means for providing the airlift (8) vibration.

13. The structurally combined unit for gravity sand filters, of claim 12, **characterized in that** vibration aerator (20) comprises a tubular housing (21) in the form of a ring, provided with holes (22) formed in the central groove along the entire length of the internal surface, wherein the housing (21) is inserted into the filtering material (23), elastic material balls (24) are placed in its cavity, and it is further equipped with a tube (25) for communicating the cavity of the housing (21) with a forced air source.

14. The structurally combined unit for gravity sand filters, of claim 12, **characterized in that** the vibration aerator (20) comprises a housing (21), consisting of two tubular parts in the form of a half ring, each part being closed at the end surfaces and comprising a central groove provided with holes (22) formed therein along the entire length of the internal surface, each part of the housing (21) being inserted into the filtering material (23) with elastic material balls (24) placed in its cavity, furthermore, the above part is provided with tubes (25), respectively, for communicating the individual cavities with a forced air source and/or that the filtering material (7) is made of polyvinyl chloride and/or that the means for providing the airlift (8) vibration is configured in the form of a vibration means fixed on the discharge chamber (27), and comprising elastic material balls (24), located in the slot, formed in said chamber (27) and/or that elastic material balls (24) are made, for example, of rubber or caoutchouc.

15. The structurally combined unit for gravity sand filters of claims 12-14, **characterized in that** the means for reducing pressure and speed of the cleaning liquid upper flow in the internal compartment of the cleaning element (9) upper part is configured at least in the form of one inclined flap (17) with one end attached to a wall of the internal compartment and with the other end located at a distance from the opposite wall, wherein in the case of one or more flaps they are arranged in a mutually movable manner in the vertical plane and so each subsequent flap is attached to the wall, opposite of the one holding the preceding flap and/or that the means for reducing pressure and speed of the cleaning liquid upper flow in the internal compartment of the cleaning element (9) upper part is configured at least in the form of an inclined tube (18) that discharges the cleaning liquid in one external compartment, each tube (18) being equipped with a valve (19) for controlling the cleaning liquid level.
